# EUROPEAN PATENT APPLICATION

(11) **EP 3 993 468 A1**
(43) Date of publication of application: **04.05.2022**
(21) Application number: 20205207.2
(22) Date of filing: 02.11.2020
(51) Int. Cl.: H04W 12/03, H04L 29/06, H04K 1/00, H04W 4/10

(54) **RADIO SYSTEM AND METHOD OF PROCESSING AT LEAST ONE RADIO SIGNAL TO BE TRANSMITTED**

(71) Applicant: Rohde & Schwarz GmbH & Co. KG, 81671 München (DE)
(72) Inventor: Storn, Rainer, 81671 München (DE); Nothacker, Stephan, 81671 München (DE); Hoheisel, Stefan, 81671 München (DE); Wenzel, Dietmar, 81671 München (DE); Kilpert, Joerg, 81671 München (DE)
(74) Representative: Prinz & Partner mbB

(57) **Abstract**

The invention relates to a radio system (10) for processing at least one radio signal to be transmitted. The radio system (10) comprises a radio (12) for transmitting a radio signal, an acoustic output device (20), an encryption module (30) configured to encrypt a message to be transmitted, and a detection module (32) that is connected with the acoustic output device (20). The radio system (10) is configured to provide a normal radio mode in which a non-encrypted radio signal is transmitted by the radio (12) and an encryption radio mode in which a radio signal is transmitted by the radio (12) that is encrypted by means of the encryption module (30). The detection module (32) is configured to detect the operation mode activated. The detection module (32) is further configured to initiate outputting an acoustic indication signal by means of the acoustic output device (20) depending on the operation mode activated, and wherein the acoustic indication signal is indicative of the operation mode activated. Further, a method of processing at least one radio signal to be transmitted is described.

## Description

The invention relates to a radio system for processing at least one radio signal to be transmitted. Further, the invention relates to a method of processing at least one radio signal to be transmitted.

In the state of the art, handheld radios, particularly military handheld radios, are known that have a considerable size and weight due to the battery size that is necessary for providing the transmission power and battery life which are required. Typically, those handheld radios weight about 1 kg and they have a size of about 750 cm³. Therefore, these radios are typically carried on the back of an operator or in a cradle or pocket of his clothing. Therefore, the operator only interacts with the radio in exceptional cases, as the operator has to unbag the radio in order to operate the radio, as a direct view on a display of the radio is necessary for operating the radio.

In addition, it is known that the radio is connected with additional peripheral components that are more easily to access, thereby improving the operability of the radio. For instance, a so-called push-to-talk (PTT) switch is used that can be operated by the operator in order to initiate a radio transmission such that it is not necessary to unbag the radio for radio transmission. Hence, a microphone is connected with the radio such that the operator is enabled to directly speak provided that the transmission has been activated previously via the push-to-talk switch.

Depending on the respective application scenario, particularly the respective use case of the radio, encrypted radio transmission might be necessary. The operator typically has to check on the display of the radio if an encrypted radio transmission is activated in order to be assured that the operator is allowed to transmit sensitive messages, particularly information.

However, it is not always possible for the operator to check the status by having a look on the display of the radio and, thus, the operator has to wait for transmitting sensitive messages/information until the operator was able to check the status on the display.

Accordingly, there is a need for improving the operability of the radio system, particularly concerning under real application conditions.

The invention provides a radio system for processing at least one radio signal to be transmitted. The radio system comprises a radio for transmitting a radio signal, an acoustic output device, an encryption module configured to encrypt a message to be transmitted, and a detection module that is connected with the acoustic output device. The radio system is configured to provide a normal radio mode in which a non-encrypted radio signal is transmitted by the radio and an encryption radio mode in which a radio signal is transmitted by the radio that is encrypted by means of the encryption module. The detection module is configured to detect the operation mode activated. The detection module is further configured to initiate outputting an acoustic indication signal by means of the acoustic output device depending on the operation mode activated, wherein the acoustic indication signal is indicative of the operation mode activated.

Accordingly, information concerning the operation mode of the radio system is provided to the operator in an acoustic manner such that the operator is enabled to acoustically obtain the information if the encryption radio mode or the normal radio mode is activated in which only a non-encrypted transmission is possible. Accordingly, it is not necessary that the operator has to visually check the display of the radio that is typically carried on the back of the operator or rather in a cradle/pocket. Therefore, it is ensured that the operator gathers the information concerning the respective operation mode in all circumstances, particularly all application scenarios, particularly even if the operator is not able to check the display of the radio.

In general, the radio offers the possibility to transmit messages in an encrypted manner or rather in an unencrypted manner, also called normal manner (normal radio mode). The encrypted transmission is used for transmitting sensitive information that shall not be intercepted by third parties. Therefore, it is important that the operator is aware if the encrypted radio transmission, namely the encryption radio mode, is activated or not.

The acoustic indication signal ensures that the operator becomes aware of the respective operation mode of the radio system, wherein the acoustic indication signal is an acoustic signal that is perceptible to the human ear. Therefore, the frequency of the acoustic indication signal may be between 20 Hz and 20 kHz.

Since the information concerning the operation mode is provided in an acoustic manner, it is not necessary that the operator looks away from current events in order to verify the respective operation mode of the radio system.

Moreover, the radio may be carried by the operator in any orientation, as it is not necessary that the operator may be enabled to have a look on the display of the radio. Generally, it is not necessary anymore that the operator has easy access to the display of the radio for verifying the respective operation mode of the radio system. Thus, the radio can be carried in a more flexible manner, particularly in a bag carried by the operator.

The acoustic indication signal may be transmitted automatically depending on the operation mode detected by the detection module. Hence, it is not necessary that the operator has to remind himself to (actively) check or rather query the respective status of the radio system, namely the respective operation mode activated. In fact, the operator gets informed automatically.

Furthermore, an antenna may be provided that is used for transmitting the radio signal to be transmitted. The same antenna may also be used for receiving radio signals that are processed by the radio. For instance, the antenna is integrated within the radio. Alternatively, the radio is connected with a separately formed antenna via a cable connection.

The radio may be a handheld radio, particularly a military handheld radio, which has a battery for providing the required power. The battery may be a rechargeable battery, also called accumulator. Thus, the radio can be carried at different positions, for instance within a bag or in a pocket of the clothes worn by the operator.

The encryption module and/or the detection module may be part of the radio. Hence, the encryption module and/or the detection module may be integrated within the radio. In other words, the encryption module and/or the detection module is housed within a housing of the radio. Particularly, the encryption module and the detection module are commonly housed in the housing of the radio.

The acoustic output device may be formed separately with regard to the radio. However, the acoustic output device may be connected with the radio via a connection, particularly a connection ensuring secure signal transmission. For instance, a cable connection is established between the acoustic output device and the radio. Alternatively, a secured wireless connection may be provided, for instance a Bluetooth connection.

Generally, the acoustic output device may have a first unit for outputting an acoustic signal (output) and a second unit for inputting a voice message, namely an acoustic signal (input). Hence, an acoustic I/O (input/output) device may be established by at least two separately formed components, for instance a headphone and a microphone. The acoustic I/O device may also be established by a single device, for instance a headset that includes a headphone and a microphone.

An aspect provides that the encryption module has a signal output via which the encrypted radio signal is outputted. The encryption module encrypts the message to be transmitted, thereby generating the encrypted radio signal that is transmitted via the antenna which is connected with the signal output of the encryption module.

According to another aspect, the radio system is configured to output the acoustic indication signal only in case that the encryption radio mode is activated. In other words, the acoustic indication signal is only generated when an encrypted transmission is possible. Therefore, it is ensured that the operator is informed that he is allowed to transmit sensitive messages, as the respective transmission is secured due to the activated encryption. Since the acoustic indication signal is only outputted when the encryption radio mode is activated, it is ensured that the operator does not transmit sensitive information in case of a malfunction of the encryption module or the detection module or rather any other component involved. The respective malfunction probably results in a failure of the acoustic indication signal, which is noticed by the operator. Accordingly, the operator will not be under the assumption of transmitting messages in an encrypted manner. In other words, the operator can be assured that a secure transmission is possible provided that the operator hears the acoustic indication signal, as the acoustic indication signal is only outputted in case of the activation of the encryption radio mode.

Put differently, the acoustic indication signal corresponds to an approval since any non-functioning of the acoustic indication signal indicates to the user that the respective transmission is unsafe. Faulty hardware or software connections or a faulty function are/is therefore more likely to be accompanied by a failure of the acoustic indication signal, which is noticed by the operator. Accordingly, the operator will not transmit any sensitive information/messages inadvertently in the normal radio mode, namely the unencrypted one.

Another aspect provides that the radio system is configured to output a first acoustic indication signal that is indicative of the encryption radio mode and a second acoustic indication signal that is indicative of the normal radio mode, wherein the second acoustic indication signal is different to the first acoustic indication signal. Thus, the operator is aware of the present status or rather operation mode of the radio system, as the respective acoustic indication signals are each indicative of the respective operation mode. In case of not receiving any acoustic indication signal, the operator gets aware that a failure within the radio system has occurred, as the operator usually would receive the first acoustic indication signal or rather the second acoustic indication signal when starting a radio transmission.

A further aspect provides that the radio system is configured to output the acoustic indication signal at the beginning of a radio transmission. Particularly, the acoustic indication signal is outputted when the operator starts a radio transmission, for instance by pressing a push-to-talk switch that is part of the radio system. Hence, the user is always informed concerning the respective operation mode activated before the operator starts transmitting a certain message. The operator is aware at the beginning of the transmission whether the subsequent message is transmitted in a secure manner or not.

According to a further aspect, the radio system is configured to output the acoustic indication signal for a pre-defined and limited time. Particularly, the radio system is configured to output the acoustic indication signal repetitively in intervals. The pre-defined and limited time may be one second. Therefore, the speech intelligibility is only slightly impaired due to the limited duration of the acoustic indication signal. In any case, the acoustic indication signal is not perceived by the operator as being disturbing.

As the acoustic indication signal is continued periodically in intervals, the operator is informed continuously concerning the respective status, namely the operation mode activated. Thus, it is ensured that the operator does not forget the status or rather operation mode of the radio system even during a longer radio transmission.

Since the acoustic indication signal is automatically repeated, it is further ensured that the operator is relieved from actively checking the respective operation mode. When the acoustic indication signal is not outputted anymore, the operator gets (at least indirectly) informed concerning the respective change of the operation mode. The same applies when the acoustic indication signal changes, namely from the first acoustic indication signal to the second acoustic indication signal or vice versa.

The intervals may correspond to a time period of four seconds such that a four-second rhythm is provided. In addition, the intervals may be chosen such that the acoustic indication signal is outputted in a frequency that corresponds to the heartbeat frequency of a relaxed person, thereby calming the operator due to the respective repetition rate of the acoustic indication signal.

Another aspect provides that the acoustic indication signal is a single tone, a complex tone, a tone sequence or a characteristic sound, particularly a chord, a sequence of an instrument, a chirp or a natural sound. The single tone may correspond to the concert pitch of 440 Hz. The respective single tone, for instance the concert pitch at 440 Hz, outputted in a certain rhythm or rather intervals does not significantly affect the radio communication.

The complex tone or rather the tone sequence ensures that the operator does not miss the acoustic indication signal, as it attracts the attention of the operator stronger.

Further, the characteristic sound may have a spectral complexity and bandwidth that ensure protection against manipulation by third parties. Hence, the characteristic sound may relate to an audio watermark. Further, it is more complex for third parties to fake the encrypted transmission.

Depending on the acoustic output device, a natural sound or a chirp is less noticeable by a third party. For instance, the acoustic output device comprises a loudspeaker that is used for playing the acoustic indication signal. Hence, the natural sound or the chirps is less noticeable when played over the loudspeaker for third parties, as the respective sound may be perceived as being noise. However, the acoustic indication signal is still recognizable by the operator, as it is known to the operator. In addition, the natural sound is less disturbing or annoying for the operator, especially in case that the natural sound is outputted repetitively.

Another aspect provides that the radio system is configured to vary the level of the acoustic indication signal during its outputting. Particularly, the radio system is configured to decrease or increase the level continuously during its outputting. Hence, the level of the acoustic indication signal may be faded. Particularly, the radio system is configured to decrease or increase the level continuously when it is outputted, for instance in a linear manner. Therefore, a varying acoustic indication signal is provided which ensures that the operator notices the acoustic indication signal due to its changing characteristics, as this attracts the awareness of the operator.

Further, the radio system may be configured to mix the acoustic indication signal with a side tone or with an audio data stream. The side tone relates to the own transmitted message that is fed back to the operator, particularly the acoustic output device. Therefore, the acoustic indication signal is only noticeable by the operator that has sent the respective message. Furthermore, no attention in the environment of the operator is generated, as it is only the operator himself that hears the acoustic indication signal.

Alternatively, the acoustic indication signal is mixed with the audio data stream such that it can also be outputted via a loudspeaker, thereby informing the environment concerning the respective operation mode of the radio system. The audio data stream can be outputted by any kind of acoustic output device, particularly several different components simultaneously such as a headphone and a loudspeaker.

Particularly, the radio system is configured to mix the acoustic indication signal with the audio data stream that passes an internal security module of the radio, which is configured to decrypt radio signals. Hence, security evaluation is simplified accordingly. The internal security module is integrated within the radio. For instance, the acoustic indication signal is mixed with the audio data stream within the internal security module, namely when the audio data stream passes the internal security module.

Another aspect provides that the radio system comprises a push-to-talk switch that is connected with the radio. Particular, the push-to-talk switch is separately formed with respect to the radio, but connected with the radio via a cable connection. The push-to-talk switch (PTT switch) may also be established as a wireless one. Furthermore, the PTT switch has at least one button to be pressed by the operator for starting a radio transmission. Hence, the radio can be carried in a bag or rather in a pocket, as no access to the radio is required for starting a radio transmission due to the separately formed PTT switch and for verifying the respective operation mode of the radio system. The respective information is obtained automatically by the acoustic indication signal.

The PTT switch may correspond to the central operation and/or control component of the radio system via which the operator is enabled to operate/control the respective components of the radio system.

Furthermore, the PTT switch has a volume switch, for instance a rotary switch for adjusting the volume. Hence, the operator is enabled to intuitively set the volume.

In addition, the PTT switch has several interfaces for connecting the radio, the acoustic output device and other components of the radio system. The interface for the radio and the interface for the acoustic output device may be located in opposite sides of the PTT switch.

Particularly, the push-to-talk switch has a data interface. Thus, the PTT switch is also enabled to receive and/or transmit data that may be processed by the radio itself or any other component of the radio system connected with the PTT switch.

Another aspect provides that the radio system comprises a user end device. Particularly, the user end device has a display module or a lamp such as a light-emitting diode. The light-emitting diode may be provided by a cipher light-emitting diode (LED). Generally, the user end device is provided to optically indicate the respective operation mode of the radio system. Therefore, the user end device may be connected with the detection module that is configured to detect the respective operation mode. Hence, an acoustic as well as visual indication concerning the respective operation mode of the radio system may be provided. For instance, the user end device is an arm-mounted tablet-like device that has a data interface connected with the radio, particularly via a hub.

Further, the acoustic output device may comprise a loudspeaker. The loudspeaker may be integrated within the radio. Additionally or alternatively, the acoustic output device is a headset to be worn by an operator of the radio. The headset may comprise a headphone and a microphone. The headset may be an in-ear headset or a high-noise headset.

The acoustic output device and the radio as well as the optional push-to-talk switch may communicate with each other, particularly via a data line, thereby recognizing the respective types and adapting their settings appropriately such that optimal characteristics are obtained. Accordingly, an auto-set functionality is provided.

The invention further provides a method of processing at least one radio signal to be transmitted. The method comprises the steps of:
- providing a radio system with a radio for transmitting a radio signal, an acoustic output device, an encryption module configured to encrypt a message to be transmitted, and a detection module,
- detecting an operation mode activated by means of the detection module, wherein the radio system has a normal radio mode in which a non-encrypted radio signal is transmitted by the radio and an encryption radio mode in which a radio signal is transmitted by the radio that is encrypted by means of the encryption module, and
- outputting an acoustic indication signal by means of an acoustic output device depending on the operation mode activated, wherein the acoustic indication signal is indicative of the operation mode activated.

The aspects and characteristics mentioned above with regard to the radio system also apply to the method. Particularly, the features indicated above also apply to the method of processing at least one radio signal. Therefore, reference is made to the explanations given above.

Generally, an acoustic indication signal may also be outputted in a radio system that relates to an air traffic control (ATC) system in case that a simultaneous call transmission (SCT) takes place. The operator at the controller working position (CWP) gets informed appropriately, as the indication of the simultaneous call transmission corresponds to an acoustic alert that is outputted by a respective acoustic output device at the controller working position, e.g. a headset. Further, an acknowledgement of a pilot of one of the aircrafts may be outputted in an acoustic manner, namely by the acoustic indication signal. Typically, the pilot acknowledges that he has received the information concerning the SCT from the operator at the CWP. Hence, the operator gets informed in an acoustic manner that the pilot has acknowledged the information transmitted concerning the SCT.

Moreover, an acoustic indication signal may be outputted in a radio system that relates to an air traffic control (ATC) system in case that two aircraft in the airspace monitored are too close to each other. The radio system comprises a radar system that gathers the information concerning the two aircrafts being too close, wherein the information obtained is processed and converted into the acoustic indication signal. The acoustic indication signal may be outputted to alert the operator at the controller working position (CWP) in an acoustic manner. Therefore, an acoustic warning is provided in addition to a visual one provided by the radar system, particularly a screen of the radar system.

The foregoing aspects and many of the attendant advantages of the claimed subject matter will become more readily appreciated as the same become better understood by reference to the following detailed description, when taken in conjunction with the accompanying drawings. In the drawings,
- Figure 1 schematically shows a radio system according to the invention, and
- Figure 2 schematically shows a flow-chart illustrating a method according to the invention.

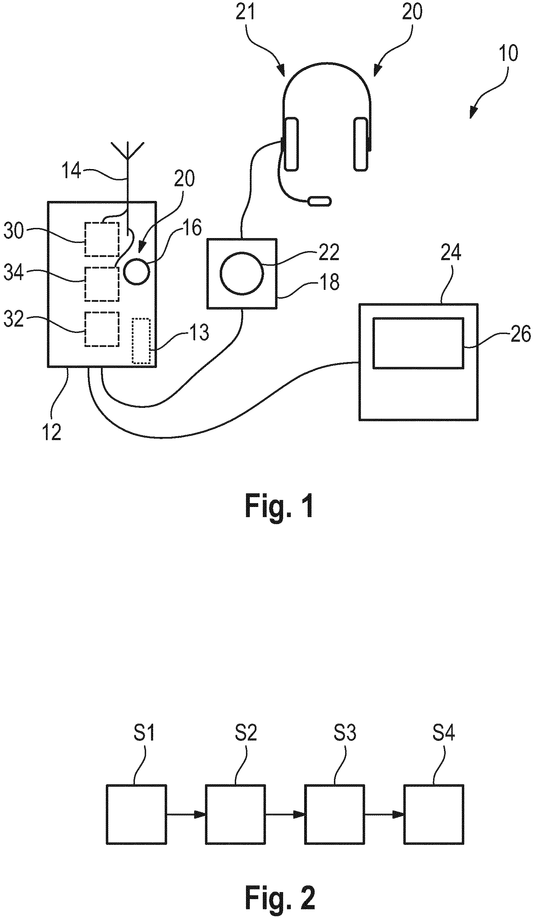

In Figure 1, a radio system 10 for processing at least one radio signal is shown.

In the shown embodiment, the radio system 10 comprises a handheld radio 12 that has a battery 13 and an integrated antenna 14 via which a radio signal can be transmitted and/or received.

The radio 12 comprises several interfaces via which further components of the radio system 10 may be connected with the radio 12. The interfaces may relate to acoustic interfaces for forwarding/receiving audio signals or rather data interfaces for forwarding/receiving data.

The radio 12 also has an integrated loudspeaker 16 via which an audio signal received or generated may be outputted, as will be described later in more detail.

The radio system 10 further comprises a separately formed push-to-talk switch 18 (PTT switch) that is interconnected between the radio 12 and an acoustic output device 20 that is established by a headset 21 having a headphone and a microphone.

The push-to-talk switch 18 also has several interfaces such that other components can be connected with the push-to-talk switch 18. Hence, the push-to-talk switch 18 may correspond to the central operation and/or control component of the radio system 10, as the components of the radio system 10 may be controlled via the PTT switch 18.

For instance, the push-to-talk switch 18 has a volume switch 22, for instance a rotary switch, for adjusting the volume of radio signals received. Hence, an operator of the radio 12 is enabled to set the volume of the acoustic output device 20 by interacting with the volume switch 22.

The PTT switch 18 is used to control the audio communication or rather radio communication of the radio system 10, particularly the radio 12, as the PTT switch 18 is interconnected between the radio 12 and the acoustic output device 20.

Furthermore, the PTT switch 18 may provide a data interface such that audio data streams may be exchanged via the PTT switch 18.

In addition, the radio 12 has an Ethernet interface via which a user end device 24 is connected, which comprises a display module 26. Therefore, data to be visualized may be forwarded from the radio 12 to the user end device 24 for displaying purposes. The user end device 24 may be an arm-mounted tablet-like device that has a respective data interface connected with the radio 12.

The radio 12 comprises an encryption module 30 as well as a detection module 32 which both are integrated within the radio 12 in the shown embodiment which illustrates the handheld radio 12. However, the encryption module 30 and/or the detection module 32 may also be separately formed.

In general, the radio system 10, particularly the radio 12, has two different operation modes, as the radio system 10 can be operated in a normal radio mode in which a non-encrypted radio signal is transmitted by the radio 12.

Further, the radio system 10 has an encryption radio mode in which a radio signal is transmitted by the radio 12, which is encrypted by means of the encryption module 30. The encryption module 30 has a signal output via which the encrypted radio signal is outputted towards the antenna 14 for being transmitted.

As mentioned above, the operator of the radio 12 has to use the push-to-talk switch 18 for starting a radio transmission, as the operation of the PTT switch 18 indicates that a radio transmission shall take place.

The detection module 32 may have already detect the respective operation mode activated or rather the detection module 32 is initiated to detect the respective operation mode activated by pressing the push-to-talk switch 18.

Depending on the outcome of the detection, namely depending on the operation mode activated, the detection module 32 initiates outputting an acoustic indication signal by means of the acoustic output device 20 such that the operator of the radio 12 is informed with regard to the operation mode activated.

The acoustic indication signal outputted is indicative of the operation mode activated. For instance, the acoustic indication signal is only outputted in case that the encryption radio mode is activated which has been detected by the detection module 32. Therefore, the operator gets informed that a secure radio transmission is ensured such that the operator may transmit sensitive information that shall not be transmitted in a non-secured manner.

Alternatively, the radio system 10, particularly the radio 12, has two different acoustic indication signals, wherein the first one is indicative of the encryption radio mode, whereas the second one is indicative of the normal radio mode. Thus, the operator is informed concerning the respective operation mode of the radio system 10 by the type of acoustic indication signal outputted.

The acoustic indication signal may be outputted at the beginning of the radio transmission which may be initiated by the operator itself when pressing the push-to-talk switch 18.

The acoustic indication signal may be outputted for a pre-defined and limited time, thereby ensuring that the operator gets aware of the acoustic indication signal, but not disturbed. Thus, the duration of the acoustic indication signal may be about one second, as this limited duration ensures that the operator gets aware of the acoustic indication signal, but it does not disturb the radio communication.

In addition, the acoustic indication signal is outputted repetitively in intervals of a certain duration in order to continuously inform the operator concerning the operation mode of the radio system 10. This ensures that the operator does not forget the current status of the radio system 10. In case that the acoustic indication signal was outputted frequency, but it is stopped suddenly, the operator is informed that the operation mode has intentionally or non-intentionally changed from the encryption radio mode to the normal radio mode. Hence, the operator becomes aware to not transmit any sensitive information anymore.

The acoustic indication signal may have different characteristics. For instance a single tone, a complex tone, a tone sequence or a characteristic sound may be used.

For instance, the respective characteristics of the acoustic indication signal may be selectable by the operator such that the operator is enabled to select the desired characteristics or type of acoustic indication signal to be outputted.

Generally, the respective characteristics may also encompass changing characteristics such as an increasing volume or rather a decreasing volume during the outputting of the acoustic indication signal, namely a fading.

In a certain embodiment, a first acoustic indication signal that is indicative of the encryption radio mode and a second acoustic indication signal that is indicative of the normal radio mode may also be used by the radio system 10, wherein both acoustic indication signals are distinguishable from each other. Therefore, the operator may gather the information concerning the respective operation mode, namely the normal radio mode or rather the encryption radio more, as well as any failure of the radio system 10 in case the operator will not receive an acoustic feedback after operating the PTT switch 18.

Usually, the operator will receive the first acoustic indication signal being indicative of the encryption radio mode provided that the encryption radio mode is activated or the operator will receive the second acoustic indication signal being indicative of the normal radio mode provided that the normal radio mode is activated. Should the operator not receive any of both acoustic indication signals, at least one of the components involved failed.

In any case, the acoustic indication signal may be outputted by the headset 21, namely the headphone, or rather the loudspeaker 16 of the radio 12. For instance, the operator may select the loudspeaker 16 of the radio 12 and/or the headset 21 for outputting the acoustic indication signal.

Generally, the headset 21, namely the headphone together with the microphone, as well as the loudspeaker 16 of the radio 12 both are acoustic output devices 20 such that the radio system 10 shown in Figure 1 comprises two acoustic output devices 20.

However, the acoustic indication signal may be mixed with a side tone. The side tone corresponds to the own transmitted message that is fed back to the operator such that the operator is enabled to hear what he said. Thus, the acoustic indication signal is only noticed by the operator. As mentioned above, the acoustic indication signal is repetitively transmitted.

Alternatively, the acoustic indication signal may be mixed with an audio data stream. Accordingly, the acoustic indication signal may be outputted via the loudspeaker 16 of the radio 12 or rather the headset 21. This might be set by the operator.

Particularly, the acoustic indication signal is mixed with the audio data stream that passes an internal security module 34 of the radio 12, which is configured to decrypt radio signals. Usually, the internal security module 34 is used to decrypt received encrypted messages.

In general, the operator gets informed automatically in an acoustic manner such that the operator does not have to actively think about the respective operation mode. Further, it is not necessary that the operator has to visually check the status on a display of the radio 12 or rather on the display module 26 of the user end device 24.

The radio system 10 shown in Figure 1 is configured to perform a method illustrated in Figure 2.

In a first step S1, the radio system 10 is provided, wherein the respective components of the radio system 10 are interconnected with each other.

In a second step S2, the detection module 32 detects the respective operation mode activated of the radio system 10, namely the normal radio mode or rather the encryption radio mode.

In a third step S3, the operator operates the push-to-talk switch 18 for transmitting a message.

In a fourth step S4, the acoustic indication signal is outputted by the acoustic output device 20 in case that the encryption radio mode is activated and the radio system 10 only outputs the acoustic indication signal in case that the encryption radio mode is activated.

Alternatively, the first acoustic indication signal or the second acoustic indication signal is outputted, which depends on the respective operation mode activated.

However, the operator gets aware of the operation mode such that the operator notices whether he is enabled to transmit sensitive information/messages or not.

Generally, the second step S2 may also be initiated by the third step S3, namely the operation of the push-to-talk switch 18. Accordingly, the operation of the push-to-talk switch 18 initiates the detection module 32 to detect the respective operation mode activated.

The term "module" is understood to describe suitable hardware, suitable software, or a combination of hardware and software that is configured to have a certain functionality. The hardware may, inter alia, comprise a CPU, a GPU, an FPGA, an ASIC, or other types of electronic circuitry.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

## Claims

1. A radio system for processing at least one radio signal to be transmitted, wherein the radio system (10) comprises a radio (12) for transmitting a radio signal, an acoustic output device (20), an encryption module (30) configured to encrypt a message to be transmitted, and a detection module (32) that is connected with the acoustic output device (20),
wherein the radio system (10) is configured to provide a normal radio mode in which a non-encrypted radio signal is transmitted by the radio (12) and an encryption radio mode in which a radio signal is transmitted by the radio (12) that is encrypted by means of the encryption module (30),
wherein the detection module (32) is configured to detect the operation mode activated, and
wherein the detection module (32) is further configured to initiate outputting an acoustic indication signal by means of the acoustic output device (20) depending on the operation mode activated, and wherein the acoustic indication signal is indicative of the operation mode activated.

2. The radio system according to claim 1, wherein the encryption module (30) has a signal output via which the encrypted radio signal is outputted.

3. The radio system according to claim 1 or 2, wherein the radio system (10) is configured to output the acoustic indication signal only in case that the encryption radio mode is activated.

4. The radio system according to claim 1 or 2, wherein the radio system (10) is configured to output a first acoustic indication signal that is indicative of the encryption radio mode and a second acoustic indication signal that is indicative of the normal radio mode, wherein the second acoustic indication signal is different to the first acoustic indication signal.

5. The radio system according to any of the preceding claims, wherein the radio system (10) is configured to output the acoustic indication signal at the beginning of a radio transmission.

6. The radio system according to any of the preceding claims, wherein the radio system (10) is configured to output the acoustic indication signal for a pre-defined and limited time, particularly wherein the radio system (10) is configured to output the acoustic indication signal repetitively in intervals.

7. The radio system according to any of the preceding claims, wherein the acoustic indication signal is a single tone, a complex tone, a tone sequence or a characteristic sound, particularly a chord, a sequence of an instrument, a chirp or a natural sound.

8. The radio system according to any of the preceding claims, wherein the radio system (10) is configured to vary the level of the acoustic indication signal during its outputting, in particular wherein the radio system (10) is configured to decrease or increase the level continuously during its outputting.

9. The radio system according to any of the preceding claims, wherein the radio system (10) is configured to mix the acoustic indication signal with a side tone or with an audio data stream.

10. The radio system according to claim 9, wherein the radio system (10) is configured to mix the acoustic indication signal with the audio data stream that passes an internal security module of the radio (12), which is configured to decrypt radio signals.

11. The radio system according to any of the preceding claims, wherein the radio system comprises a push-to-talk switch (18) that is connected with the radio (12), in particular wherein the push-to-talk switch (18) is separately formed with respect to the radio (12), but connected with the radio (12) via a cable connection.

12. The radio system according to claim 11, wherein the push-to-talk switch (18) has a data interface.

13. The radio system according to any of the preceding claims, wherein the radio system (10) comprises a user end device (24), in particular wherein the user end device (24) has a display module (26) or a lamp such as a light-emitting diode.

14. The radio system according to any of the preceding claims, wherein the acoustic output device (20) comprises a loudspeaker (16) and/or wherein the acoustic output device (20) is a headset (21) to be worn by an operator of the radio.

15. A method of processing at least one radio signal to be transmitted, wherein the method comprises the steps of:
- Providing a radio system (10) with a radio (12) for transmitting a radio signal, an acoustic output device (20), an encryption module (30) configured to encrypt a message to be transmitted, and a detection module (32),
- Detecting an operation mode activated by means of the detection module (32), wherein the radio system (10) has a normal radio mode in which a non-encrypted radio signal is transmitted by the radio (12) and an encryption radio mode in which a radio signal is transmitted by the radio (12) that is encrypted by means of the encryption module (30), and
- Outputting an acoustic indication signal by means of an acoustic output device (20) depending on the operation mode activated, wherein the acoustic indication signal is indicative of the operation mode activated.
